# EUROPEAN PATENT SPECIFICATION

(11) **EP 1 903 411 B1**
(45) Date of publication and mention of the grant of the patent: **06.03.2013**
(21) Application number: 06019814.0
(22) Date of filing: 21.09.2006
(51) Int. Cl.: G05B 19/418, G06F 17/30

(54) **Proxy server for integration of industrial automation data over multiple networks**
Proxy-Server zur Integration von industriellen Automatisierungsdaten über mehrere Netzwerke
Serveur proxy pour l'intégration de données d'automatisation industrielle sur plusieurs réseaux

(43) Date of publication of application: 26.03.2008
(73) Proprietor: Rockwell Software Inc., West Allis, Wisconsin 53227 (US)
(72) Inventor: Chand, Sujeet, Brookfield, Wisconsin 53045 (US)
(74) Representative: Grünecker, Kinkeldey, Stockmair & Schwanhäusser

(56) References cited:
- EP-A- 1 091 270
- EP-A- 1 420 315
- JP-A- 2006 018 368
- US-A1- 2003 014 500

## Description

### TECHNICAL FIELD

The subject invention relates to industrial control systems and, more particularly, to enabling utilization of legacy devices when updating an industrial control system data model.

### BACKGROUND

Due to advances in computing technology, businesses today are able to operate more efficiently when compared to substantially similar businesses only a few years ago. For example, internal networking enables employees of a company to communicate instantaneously by email, quickly transfer data files to disparate employees, manipulate data files, share data relevant to a project to reduce duplications in work product, *etc*. Furthermore, advancements in technology have enabled factory applications to become partially or completely automated. For instance, operations that once required workers to put themselves proximate to heavy machinery and other various hazardous conditions can now be completed at a safe distance therefrom.

Further, imperfections associated with human action have been minimized through employment of highly precise machines. Many of these factory devices supply data related to manufacturing to databases that are accessible by system/process/project managers on a factory floor. For instance, sensors and associated software can detect a number of instances that a particular machine has completed an operation given a defined amount of time. Further, data from sensors can be delivered to a processing unit relating to system alarms. Thus, a factory automation system can review collected data and automatically and/or semi-automatically schedule maintenance of a device, replacement of a device, and other various procedures that relate to automating a process.

While various advancements have been made with respect to automating an industrial process, utilization and design of controllers has been largely unchanged. In more detail, industrial controllers have been designed to efficiently undertake real-time control. For instance, conventional industrial controllers receive data from sensors and, based upon the received data, control an actuator, drive, or the like. These controllers recognize a source and/or destination of the data by way of a symbol and/or address associated with source and/or destination. More particularly, industrial controllers include communications ports and/or adaptors, and sensors, actuators, drives, and the like are communicatively coupled to such ports/adaptors. Thus, a controller can recognize device identify when data is received and further deliver control data to an appropriate device.

As can be discerned from the above, data associated with conventional industrial controllers is created, delivered, and/or stored with a flat namespace data structure. In other words, all that can be discovered by reviewing data received and/or output by a controller is an identity of an actuator or sensor and a status thereof. This industrial controller architecture operates efficiently for real-time control of a particular device - however, problems can arise when data from industrial controllers is desired for use by a higher-level system. For example, if data from the controller was desired for use by a scheduling application, individual(s) familiar with the controller must determine which data is desirable, sort the data, package the data in a desired format, and thereafter map such data to the scheduling application. This introduces another layer of software, and thus provides opportunities for confusion in an industrial automation environment. The problem is compounded if several applications wish to utilize similar data. In operation, various controllers output data, package it in a flat namespace structure, and provide it to a network. Each application utilizing the data copies such data to internal memory, sorts the data, organizes the data, and packages the data in a desired format. Accordingly, multiple copies of similar data exist in a plurality of locations, where each copy of the data may be organized and packaged disparately.

Furthermore, updating data structures of controllers is associated with another array of implementation problems. For instance, some legacy controllers or other devices may not be associated with sufficient memory and/or processing power to support an updated application, and it is not cost effective for a company to replace every controller within an enterprise. Therefore, not only will multiple copies of data be existent within an industrial automation environment, but multiple copies of disparately structured data will be existent upon a network. Applications may require disparate mapping modules to enable mapping between controllers associated with first and second architectures. Thus, simply updating an architecture of controllers does not alleviate current deficiencies associated with industrial controllers in an industrial automation environment.

EP 1 420 315 A relates to a system to facilitate data distribution in an industrial control environment. A database protocol component operating in the control environment is provided to convert control or factory protocols to a native language format associated with a network database. When access is attempted across a network by a remote system, a database application can exchange data with the industrial control components via a protocol converter. The protocol converter receives/sends the data in a language associated with the database application and translates the data into a control data format employable by the industrial control components. The protocol converter is installed on the industrial control component. In some examples, the protocol converter can reside in the industrial control component and/or be associated with the industrial control component such as reside on a communications module or I/O module, or interface system that interacts with the controller.

### SUMMARY

It is the object of the present invention is to improve the security of prior art techniques.

This object is solved by the subject matter of independent claim 1.

Preferred embodiments are defined by the dependent claims.

The following presents a simplified summary of the claimed subject matter in order to provide a basic understanding of some aspects described herein. This summary is not an extensive overview, and is not intended to identify key/critical elements or to delineate the scope of the claimed subject matter. Its sole purpose is to present some concepts in a simplified form as a prelude to the more detailed description that is presented later.

A proxy server is described herein, wherein the proxy server enables use of a common, structured data model throughout an industrial automation environment (regardless of existence of legacy devices and/or third party devices). The proxy server includes hardware and software that can bridge disparate communication networks and convert data packets associated with a flat namespace to one that is hierarchically structured. The proxy server can include software for defining and configuring data packets into a common, structured data model, and can further include hardware for collecting data packets from legacy controllers/devices and third party controllers/devices. For instance, the aforementioned software can include an editor that enables a user to map data elements collected by the hardware into data structures that conform to the hierarchically structured data model. For instance, the user can define a set of events that relate to completion of certain operations. In other words, the events can be constructed from the data and its logical combination through use of predefined rules.

A data structure defined by the editor can include several data elements and can further include a message or information event. For instance, "milling operation at station ten was completed with a measured diameter of 0.001 inches" can be an information event. The editor can further enable a user to configure a method for transferring structured data or events from the proxy server to a software application running on another computing platform or server. The data transport can be one of several known transport mechanisms such as MQ messaging, web services, XML, *etc.* In summary, the software enables mapping of collected data into meaningful information and configuration of transfer of information to other controllers or software applications running on various computing platforms.

The proxy server can further include a communications interface to a network on which a programmable controller resides as well as an interface to a server (such as an OPC server) that collects and forwards data from such controllers utilizing a known interface protocol. Thus, the OPC server can reside outside the proxy server or be embedded within the proxy server. Moreover, the proxy server can connect to one or more networks at a single instance in time. Thus, the proxy server can act as a bridge between different communication networks, and can further automatically convert data from a first format to a hierarchically structured data format. Furthermore, the proxy server can administer uniform security over several devices. For example, some devices do not support security functions, and other devices need to be individually programmed. Rather than leaving devices disassociated with security functions and/or tediously updating one device at a time, the proxy server can be employed as a security agent.

To the accomplishment of the foregoing and related ends, certain illustrative aspects of the invention are described herein in connection with the following description and the annexed drawings. These aspects are indicative, however, of but a few of the various ways in which the principles of the invention can be employed and the subject invention is intended to include all such aspects and their equivalents. Other advantages and novel features of the invention will become apparent from the following detailed description of the invention when considered in conjunction with the drawings.

### BRIEF DESCRIPTION OF THE DRAWINGS

FIG. 1 is a high-level system block diagram of a system that facilitates provision of a hierarchically structured data model throughout an industrial environment.

FIG. 2 is a system block diagram illustrating a proxy server outputting hierarchically structured data.

FIG. 3 illustrates a system that supports conversion of data from multiple programmable logic controllers to data that is formatted in accordance with a hierarchically structured data model.

FIG. 4 illustrates a proxy server that supports various security and communications features, according to the invention.

FIG. 5 illustrates a proxy server that supports data aggregation and workflow execution through utilization of a hierarchically structured data model.

FIG. 6 illustrates a distributed proxy server.

FIG. 7 is a system illustrating provision of data formatted in accordance with a hierarchically structured data model to a graphical user interface.

FIG. 8 is a representative flow diagram of a methodology for converting conventional programmable logic controller data to data formatted in accordance with a hierarchically structured data model.

FIG. 9 is a representative flow diagram of a methodology for utilizing templates to reformat data.

FIG. 10 is a representative flow diagram of a methodology for bridging multiple networks through use of a proxy server.

FIG. 11 is a representative flow diagram of a methodology for editing/configuring a programmable logic controller through a proxy server.

FIG. 12 is a visual representation of an exemplary structure upon which the hierarchically structured data model can be based.

FIG. 13 is an example operating system upon which various features described herein can be implemented.

FIG. 14 is an exemplary computing environment within which various features described herein can interact.

### DETAILED DESCRIPTION

The claimed subject matter is now described with reference to the drawings, wherein like reference numerals are used to refer to like elements throughout. In the following description, for purposes of explanation, numerous specific details are set forth in order to provide a thorough understanding of the claimed subject matter. It may be evident, however, that such matter can be practiced without these specific details. In other instances, well-known structures and devices are shown in block diagram form in order to facilitate describing the invention.

As used in this application, the terms "component" and "system" and the like are intended to refer to a computer-related entity, either hardware, a combination of hardware and software, software, or software in execution. For example, a component may be, but is not limited to being, a process running on a processor, a processor, an object, an instance, an executable, a thread of execution, a program, and/or a computer. By way of illustration, both an application running on a computer and the computer can be a component. One or more components may reside within a process and/or thread of execution and a component may be localized on one computer and/or distributed between two or more computers.

Furthermore, the claimed subject matter may be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks (e.g., compact disk (CD), digital versatile disk (DVD)...), smart cards, and flash memory devices (e.g., card, stick, key drive...). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope of the claimed subject matter. Moreover, the word "exemplary" is used herein to mean serving as an example, instance, or illustration. Any aspect or design described herein as "exemplary" is not necessarily to be construed as preferred or advantageous over other aspects or designs.

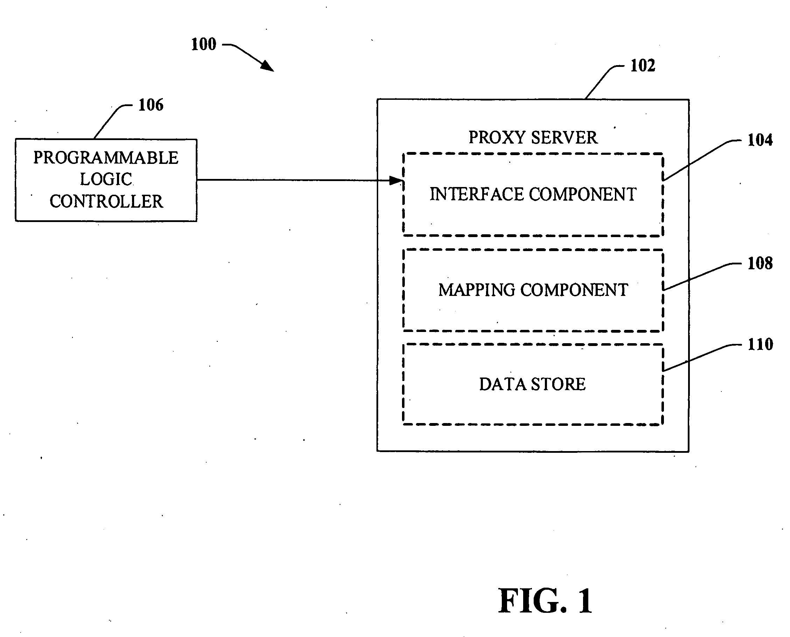

Turning now to the drawings, Fig. 1 illustrates a system 100 that facilitates provision of a uniform, hierarchically structured data model throughout an industrial automation system (regardless of existence of legacy devices that are incapable of supporting the data model). The system 100 includes a proxy server 102 that is utilized to map legacy data (e.g., data that is not formatted in accordance with a hierarchically structured data model) to data that is formatted in accordance with a hierarchically structured data model. In more detail, conventional data models utilized by programmable logic controllers (PLCs), numerical controllers, robotic controllers, smart devices, and other factory devices (collectively referred to as controllers herein) are associated with a flat namespace, meaning that programming and configuration of PLCs (and other factory controllers and smart devices) occurs in a "bottom-up" manner. In other words, tags (inputs and outputs of PLCs) of PLCs are first configured, then the PLCs are configured with higher-level systems, *etc.* It is believed, however, that a data model structured hierarchically offers greater usability when compared to data models conventionally associated with PLCs, as a hierarchically structured data model is intuitive. For instance, the hierarchically structured data model can provide a high-level enterprise view of a system, and a user can traverse through portions of the hierarchy in connection with viewing data associated with a factory as well as programming PLCs and other devices associated with the factory. In one particular example, a hierarchical data model can be modeled after ISA S88, ISA S95, industry standards, and/or a combination thereof. It is understood, however, that any manner of hierarchically configuring a factory can be utilized in connection with creation/description of a hierarchical data model.

Another advantage associated with a hierarchically structured data model is an ability to perform tracking and tracing across system/process boundaries. In more detail, factory data can be correlated to material data through employment of the hierarchically structured data model. Thus, which materials are associated with particular batches and other information that can be quite useful in an industrial automation environment can be easily discovered through employment of the hierarchically structured data model (which can correlate factory data to other data). In contrast, conventionally an individual would need to manually undertake such correlation, thereby increasing possibility of error.

Today's controllers (PLCs, numeric controllers, robotic controllers, smart devices, and the like), however, may not support such a data model, and it would be financially burdensome to simultaneously replace legacy/third party devices that do not support the aforementioned hierarchically structured data model. It is, however, desirable to maintain a consistent data model throughout an enterprise, thus enhancing system interoperability as consistency in data format for review/programming. The proxy server 102 facilitates such consistency. In more detail, the proxy server 102 includes an interface component 104 that facilitates reception of data from a PLC 106 that is not configured in accordance with the hierarchically structured data model and/or cannot support the hierarchically structured data model. While this figure and other later described figures depict PLCs, it is understood that other factory controllers, such as robotic controllers and numeric controllers, as well as smart devices utilized in a factory floor, can output data that is structured in a flat manner. These factory devices can be collectively referred to as "controller" for purposes of interpreting the claims. For instance, the PLC 106 can be a legacy device and/or a device associated with a vendor that does not support the hierarchically structured data model, and the interface component 104 can be any suitable hardware, software, or a combination thereof that facilitates reception of data from the PLC 106.

The proxy server 102 further includes a mapping component 108 that transforms/converts data formatted in accordance with properties/abilities of the PLC 106 to data formatted in accordance with the aforementioned hierarchically structured data model. For instance, the proxy server 102 can include and/or be associated with a data store 110 that comprises one or more templates, wherein the templates facilitate mapping between the data model supported by the PLC 106 and the hierarchically structured data model (which can, for example, be modeled upon ISA S95, ISA S88, and/or a combination thereof). Accordingly, the mapping component 108 can recognize structure of data that is received from the PLC 106 and thereafter locate and employ a corresponding template that enables transformation/conversion of the data model of the PLC 106 to the hierarchically structured data model.

Furthermore, programming of the PLC 106 can be undertaken by way of the proxy server 102. For example, an Information Technology (IT) individual can program the PLC in accordance with the hierarchical data model, rather than in accordance with the data model associated with such PLC 106. Thus, the PLC 106 can be programmed in a top-down manner. In other words, when opening an editor, an IT individual can be presented with a high-level view of an enterprise, and can "drill down" to program a desired sensor or output behavior on a selected PLC. As a specific example, an IT individual can open an editor and be proved with a view of an enterprise. Thereafter, the individual can select a desired factory, a desired cell, a desired line, and a desired piece of equipment and/or PLC, and program the selected PLC as desired, regardless of whether the selected PLC is capable of understanding the hierarchical data model. Similarly, to retrieve data, an individual need simply traverse through the data model hierarchy and request desired data, which can then be returned to the user in accordance with the hierarchical data model. The proxy server 102 generally and the mapping component 108 specifically provide for the above-described conversion of data.

The proxy server 102 enables a reviewer/programmer of data to be provided with a consistent representation of data regardless of existence of disparate data formats associated with devices on a factory floor. For instance, a first line may include PLCs from a first provider, while a second line may include PLCs from a second provider, and the PLCs can be configured to operate with disparate data models. Accordingly, to review data from each PLC, an IT individual need be familiar with each disparate data type. If there are several disparate systems, then individuals must be knowledgeable of various data formats. The proxy server 102 facilitates provision of a consistent data model regardless of vendor and/or capabilities of the PLC 106.

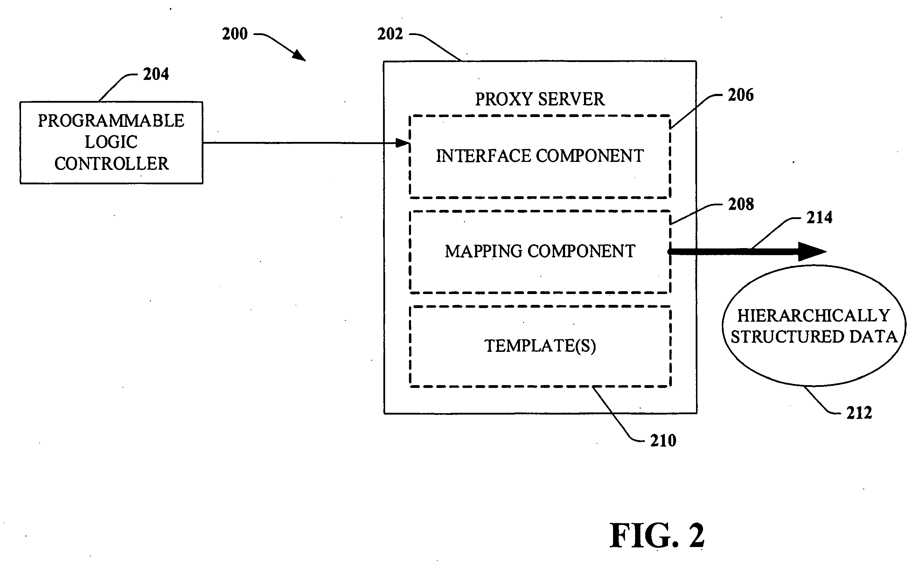

Now turning to Fig. 2, a system 200 that facilitates conversion of data of various formats within an industrial setting to a common, structured data format is illustrated. The system 200 includes a proxy server 202 that receives data from a PLC 204, wherein the PLC 204 is a third-party or legacy device (e.g., the PLC 204 does not support a common, structured data model). It is understood, however, that while the PLC 204 is depicted as an origin of data, other suitable devices (such as other factory controllers or smart devices) can also be employed to create/output the data. In particular, an interface component 206, which can be a port, cabling, or any other suitable hardware/software, can be associated with the proxy server 202 and facilitate reception of data from the PLC 204. The received data can then be delivered to a mapping component 208, which recognizes a data format associated with the PLC 204 upon receipt of such data and retrieves a template 210 according to the recognized data format. The template 210 can be program modules that actively transform data, fields within a table that directly map to a desired data type, and/or a combination thereof.

The interface component 206 can then output data to a prescribed network 212 over a pre-defined network protocol. For instance, the proxy server 202 can include a component (not shown) that facilitates bridging disparate networks. More particularly, data from the PLC 204 can be relayed over a proprietary network protocol associated with such PLC 204. The proxy server 202 can convert the data so that it conforms to a pre-defined network protocol (e.g., the Common Industrial Protocol (CIP)). Upon such transformation, the data can be re-formatted so that it conforms to a hierarchically structured data model, and hierarchically structured data 212 can be placed upon a network 214. Such data can then be accessed by other devices upon such network. Accordingly, interoperability and communications between legacy/third party devices in an industrial environment is enabled through utilization of the proxy server 202.

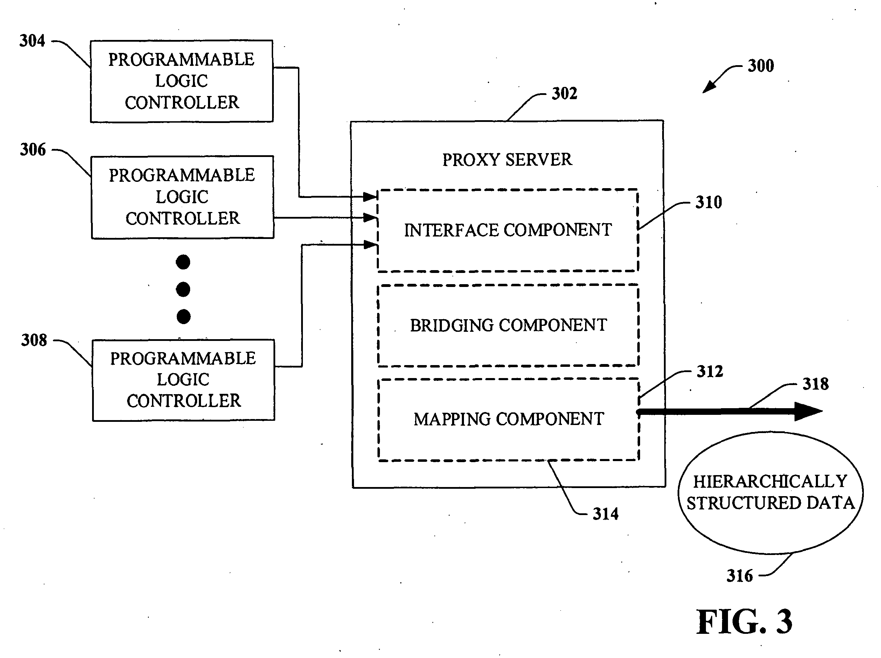

Turning now to Fig. 3, a system 300 that facilitates unification of a data model in an industrial automation environment is illustrated. The system 300 includes a proxy server 302 that is communicatively coupled to a plurality of PLCs 304-308 or other suitable factory devices. For instance, each of the PLCs 304-308 can be associated with disparate vendors and thus operate on data with different formats. Furthermore, each of the PLCs 304-308 can be coupled to the proxy server 302 through different networks. More specifically, the PLC 304 can transmit and receive data over Hart, the PLC 306 can transmit and receive data over ProfiBus, and the PLC 308 can transmit and receive data over FieldBus. Thus, it can be discerned that the proxy server 302 can receive data that is formatted in drastically different manners.

The proxy server 302 includes an interface component 310 that is configured to receive data from each of the PLCs 304-308 over the plurality of networks. For instance, the interface component 310 can be a plurality of ports as well as software associated with such ports. The interface component 310 can be associated with a bridging component 312 that acts as a network bridge. Thus, data carried by the disparate networks can be manipulated so that it conforms to a common network (e.g., CIP). Accordingly, the bridging component 312 can recognize a network protocol associated with received data from the PLCs 304-308 and perform operations to convert such data so that it conforms to a pre-defined protocol. Upon such conversion, a mapping component 314 can be employed to convert the data so that it conforms to a hierarchical data model (rather than data models associated with flat namespaces). The mapping component 314 can thereafter provide hierarchically structured data 316 to a requester of such data over a network 318, wherein the network conforms to the predefined protocol. Thus, through the proxy server 302, data relating to disparate devices provided by different vendors can be available in a uniform manner across an enterprise.

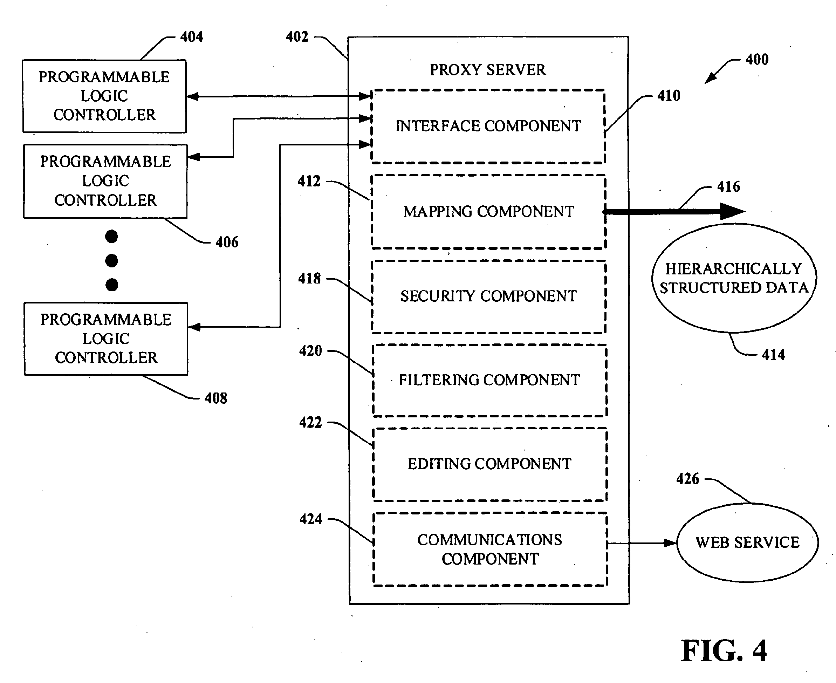

Referring now to Fig. 4, a system 400 according to the invention, that facilitates provision of uniformly formatted data across an industrial enterprise is illustrated. The system 400 includes a proxy server 402 that converts data from a plurality of PLCs 404-408 or other factory devices (e.g., controllers) into a common data format. The proxy server 402 can be any suitable hardware device and can include any suitable software to effectuate the conversion. For instance, the proxy server 402 can be a server, a desktop PC, a laptop PC, a PLC, a switch, a router, a gateway, multiples of the aforementioned items, combinations of the aforementioned items, *etc.* The proxy server 402 includes an interface component 410 that facilitates reception of data from the plurality of PLCs 404-408. As described above, each PLC can receive, operate upon, and transmit data in disparate formats, wherein the reception and transmittal of data can occur over different networking protocols. The interface component 410 can be designed to enable receipt of disparately formatted data.

The disparately formatted data can then be received by a mapping component 412 that discovers format of the received data and converts such data into data that corresponds to a hierarchically structured data model. Thus, hierarchically structured data 414 can be provided over a network 416, wherein the network is associated with a pre-defined protocol. Accordingly, uniform data can be provided to users of an industrial automation system regardless of device type/vendor. The proxy server 402 further includes a security component 418 that provides uniform security to each of the PLCs 404-408. Many of today's PLCs do not support security functions, and those that do are proprietary and must be programmed directly at the PLC. Thus, disparate PLCs can be associated with different security. The security component 418 at the proxy server 402, however, enables uniform application of security functions across the PLCs 404-408. For instance, the security component 418 can facilitate request of usernames, passwords, PINs, biometric indicia, and the like from a user desiring to review/modify data relating to the PLCs 404-408. Furthermore, the security component 418 can provide different access levels to disparate users and different portions of data. For instance, a user may have read only access to a first portion of data within the PLC 404, read-write access to a second portion of data within the PLC 404, no access to a third portion of data within the PLC 404, read-write access to all data within the PLC 406, *etc.* These different security levels can be enforced by the security component 418. Furthermore, the security component 418 can be employed to periodically validate data associated with the PLCs 404-408. In one example, the PLCs 404-408 can generate log files and store such files internally and/or at an external database communicatively coupled to the proxy server 402. The security component 418 can access such log files to ensure that the PLCs 404-408 have not been subject to tampering. In still another example, security functions can be enforced for the PLCs 404-408 at the proxy server 402.

The security component 418 can also operate in conjunction with a filtering component 420 which can filter data based upon user identity, user location, or any other suitable parameter. For instance, the proxy server 402 can be coupled to a directory structure (not shown), and an operator can request data through the directory by way of the proxy server 402. The filtering component 420 can filter retrieved data so that only data pertinent to an operator's identity/current task is returned to the operator. The proxy server 402 can further include an editing component 422 that enables an operator/user to edit/configure/program the PLCs 404-408. For example, as described above, the user can navigate through a hierarchy of the factory by way of the hierarchically structured data model until desired location in such hierarchy is reached. Thereafter, the user/operator can edit/configure/program the PLC. Thus, the proxy server 402 facilitates editing/configuring/programming each of the PLCs 404-408 through a common data structure (rather than a disparate structure for each of the PLCs 404-408). Moreover, the editing component 422 enables off-line editing/configuring/programming of the PLCs 404-408. For instance, one knowledgeable of the hierarchy of the data model can make modifications to PLCs 404-408 offline, and thereafter plug the modifications into the proxy server 402 (which can map the modifications to data formats required by the PLCs 404-408).

The proxy server 402 can further include a communications component 424 that can receive and utilize a web service 426. Thus, a web service can be implemented within the proxy server 402. A Web service is a software system designed to support interoperable machine-to-machine interaction over a network, and has an interface described in a machine-processable format (e.g., WSDL). Other systems interact with the web service in a manner prescribed by its description using SOAP messages. Software applications written in various programming languages and running on various platforms can use web services to exchange data over computer networks in a manner similar to inter-process communication on a single computer.

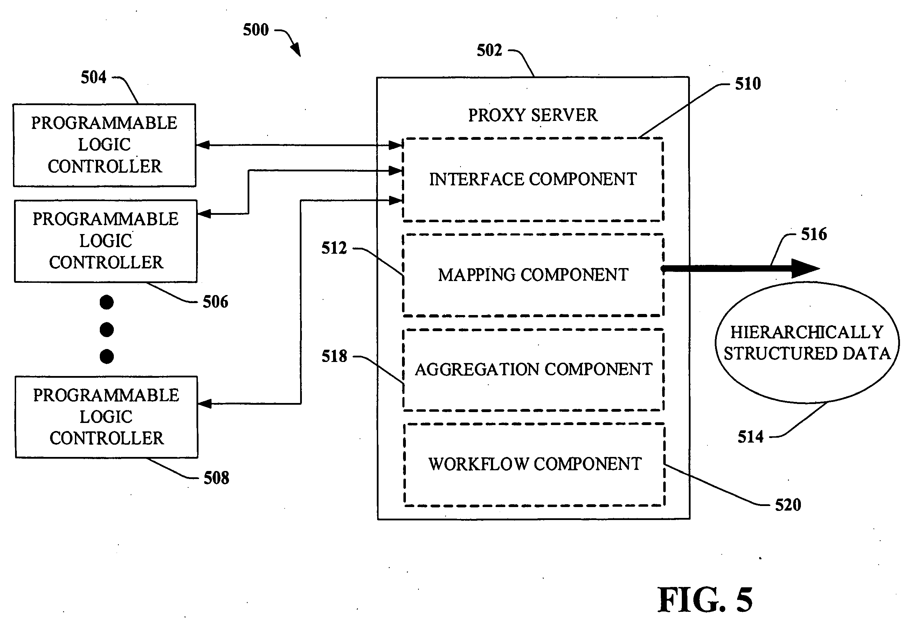

Now turning to Fig. 5, a system 500 that facilitates providing a uniform data model for various devices in an industrial automation setting is illustrated. The system 500 includes a proxy server 502 that is communicatively coupled to a plurality of PLCs 504-508 (or other factory devices), each of which can be manufactured by a different manufacturer and/or be associated with insufficient processing/memory to support a hierarchically structured data model. The proxy server 502 includes an interface component 510 that is designed to facilitate reception of data from the PLCs 504-508, wherein the data can be transported over a plurality of disparate networks. The proxy server 502 further includes a mapping component 512 that is communicatively coupled to the interface component 510, wherein the mapping component 512 converts data formatted according to a data model associated with each of the PLCs 504-508 to data that accords to a hierarchically structured data model. For instance, the hierarchically structured data model can be based at least in part upon ISA S95, ISA S88, and/or a combination thereof. The mapping component 512, upon conversion of the data, can provide hierarchically structured data 514 to a network 516.

The proxy server 502 further includes an aggregation component 518 that enables data from disparate devices/locations to be aggregated and provided to a user. In one particular example, each of the PLCs 504-508 can be associated with production of a specific product, but exist on disparate lines. A user can request data relating to such product, and the aggregation component 518 can cause the interface component 510 to receive data from the PLCs 504-508 relating to the product. The aggregation component 518 can then aggregate such data, thereby providing the user with a robust collection of data relating to the product of interest. Moreover, the proxy server 502 can be positioned at an enterprise level, thereby allowing aggregation of data between different factories. For example, an automobile manufacturer may have plants in several different cities, wherein two or more of the plants are manufacturing a substantially similar automobile. Through the proxy server 502 and the aggregation component 518, data can be aggregated and provided to a requestor at an enterprise level. This feature can provide an enterprise with an ability to quickly compare output and efficiencies of two disparate lines, cells, *etc.* at separate factories without having a substantial amount of custom mapping. Rather, the mapping component 512 converts data to a common data format (a hierarchically structured data model), thereby enabling efficient aggregation of such data.

The proxy server 502 can further include a workflow component 520 that enables receipt and execution of a workflow to be facilitated through the proxy server 502. Workflow is the operational aspect of a work procedure, defining how tasks are structured, which device performs the task, the relative order of the tasks, how the tasks are synchronized, how information flows to support the tasks, how tasks are to be tracked, *etc.* Thus, an exemplary workflow would be to process a first task through PLC 504 at time t1, process a second task through PLC 506 at time t2, process a third and fourth task simultaneously at PLC 504 and 508, *etc.* The workflow component 502 enables a workflow to be programmed and executed through the proxy server 502 (e.g., PLCs can be programmed through the proxy server 502 and/or the proxy server 502 can deliver commands to the PLCs 504-508, wherein such commands are mapped to the PLCs 504-508 by way of the mapping component 512). In one specific example, the workflow component 520 can execute Business Process Execution Language (BPEL) in connection with facilitating execution of a workflow.

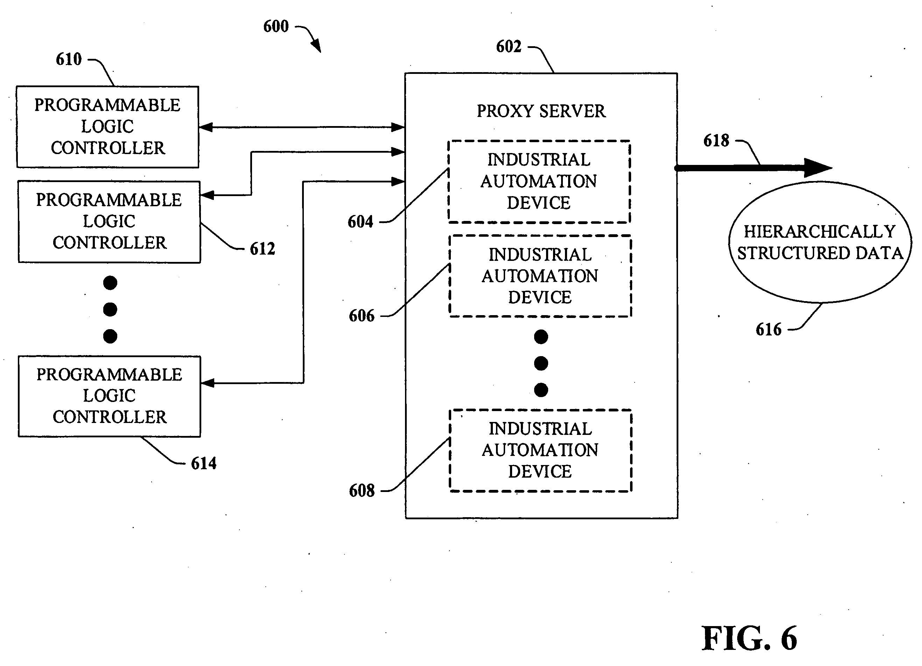

Now referring to Fig. 6, a system 600 that illustrates one exemplary implementation of a proxy server is illustrated. The system 600 includes a proxy server 602 that consists of a plurality of industrial automation devices 604-608. In other words, features of the proxy server 602 (described herein) can be effectuated in a distributed manner through utilization of the industrial automation devices 604-608. The industrial automation devices 604-608 can be PLCs, switches, routers, gateways, other factory controllers, smart devices, any other suitable industrial automation device, or any combination of such devices. The proxy server 602 receives data from a plurality of PLCs 610-614, which can communicate to the proxy server 602 through various network protocols. Thus, the industrial automation devices 604-608 can be coupled to the PLCs 610-614 in a manner to receive and interpret data associated with such PLCs 610-614. The industrial automation devices 604-608 can then individually and/or collectively perform features described above with respect to the proxy server 602. In particular, the industrial automation devices 604 (collectively acting as the proxy server 602) can receive data from the PLCs 610-614 (in various formats) and, through templates and other suitable techniques, map the data to a common format (based upon a hierarchically structured data model). Thus, the proxy server 602 can provide hierarchically structured data 616 to a network 618.

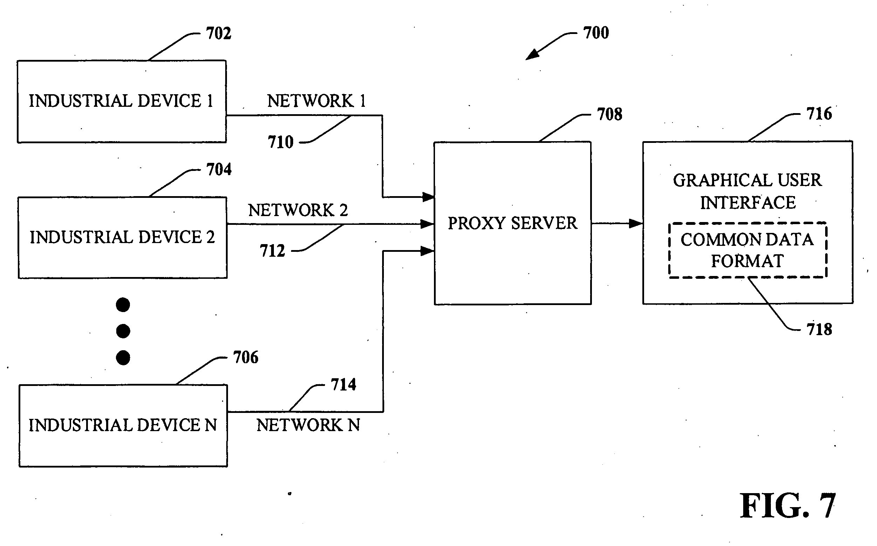

Now turning to Fig. 7, an exemplary system 700 for utilization in an industrial automation environment is illustrated. The system 700 includes a plurality of industrial devices 702-706 which can communicate to a proxy server 708 by way of disparate networks 710-714 that communicate through different protocols. More particularly, a first industrial device 702 can communicate to the proxy server 708 over a first network 710, a second industrial device 704 can communicate to the proxy server 708 over a second network 712, and an Nth industrial device 706 can communicate to the proxy server 708 over an Nth network 714. The proxy server 708 can receive disparate data types over the different networks 710-714, bridge the networks so that data is formatted in accordance with a pre-defined network protocol, and thereafter map the data types to a common, structured data type. In more detail, the proxy server 708 maps the data in accordance with a hierarchically structured data model.

The proxy server 708 can then deliver hierarchically structured data to a graphical user interface 716, which can then display data to a user in a common data format 718. As described above, the common data format 718 can be structured in accordance with ISA S95, ISA S88, and/or a combination thereof. In operation, a user can access the graphical user interface 716 in order to review data from the industrial devices 702-706 and/or program the industrial devices 702-706. The user can traverse through data structured according to the common data format 718 until a desired device is reached. The user can then receive requested data relating to the device in real-time through mapping undertaken by the proxy server 708. The data can be stored on the device itself, at the proxy server 708, and/or in a directory (not shown). Similarly, the user can program a desired device in the common data format 718, and thereafter the proxy server 708 can map such programming to a native format of the desired device. Thus, a common, structured representation can be provided throughout an enterprise.

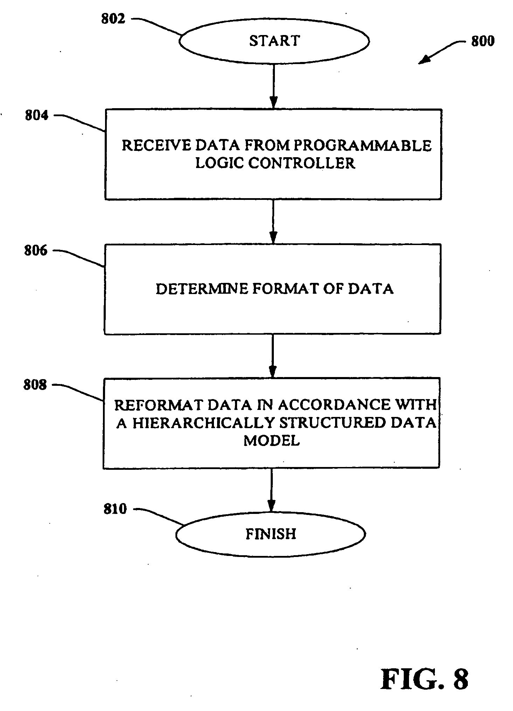

Figs. 8-11 describe examples of methodologies which are not part of the claimed subject matter. For purposes of simplicity of explanation, the methodologies are shown and described as a series of acts. Those skilled in the art will understand and appreciate that a methodology could alternatively be represented as a series of interrelated states or events, such as in a state diagram. Additionally, it should be further appreciated that the methodologies disclosed hereinafter and throughout this specification are capable of being stored on an article of manufacture to facilitate transporting and transferring such methodologies to computers. The term article of manufacture, as used herein, is intended to encompass a computer program accessible from any computer-readable device, carrier, or media.

Turning specifically to Fig. 8, a methodology 800 for providing a uniform, structured data model throughout an enterprise is illustrated. The methodology begins at 802, and at 804 data is received from a programmable logic controller, other factory controller, smart device, *etc.* For instance, the programmable logic controller can be incapable of supporting a hierarchically structured data model. In particular, the programmable logic controller can be manufactured by a vendor, wherein the vendor associates the programmable logic controller with a proprietary data model. Furthermore, the programmable logic controller can be designed to communicate over a particular protocol, such as Hart, ProfiBus, Modbus, ASIbus, Foundation FieldBus, *etc.*

At 806, a format of the received data is determined. In more detail, data from the programmable logic controller will be formatted according to a particular protocol. Thus, the protocol can be determined and the data can be re-formatted in accordance with a pre-defined protocol. Thereafter, format of the device data can be determined. At 808, the data received from the programmable logic controller is reformatted in accordance with a hierarchically structured data model. For instance, the data model can be based at least in part upon ISA S95, ISA S88, and/or a combination thereof. Therefore, a common, structured data model can be provided throughout an enterprise. The methodology completes at 810.

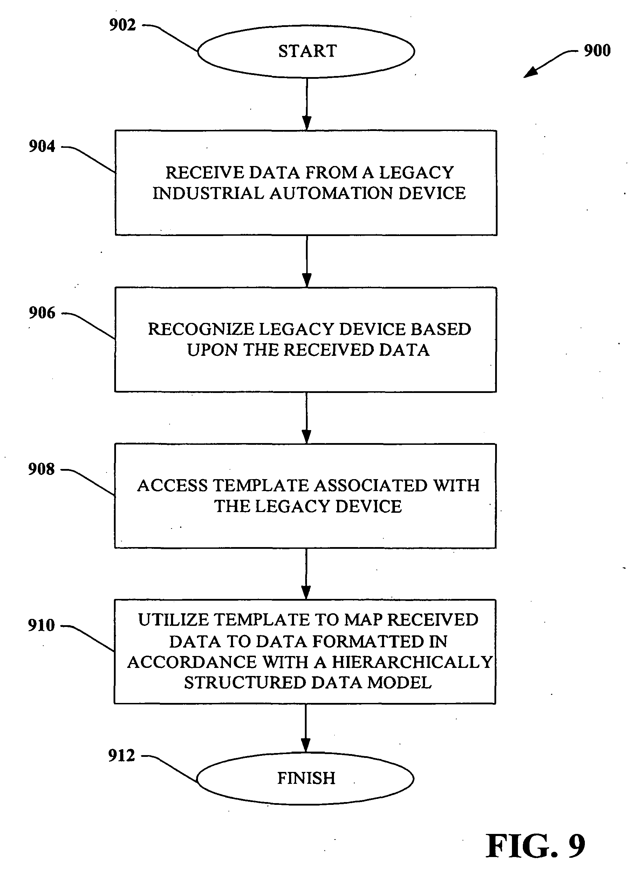

Referring now to Fig. 9, a methodology 900 for mapping data from industrial automation devices to a structured data model is illustrated. The methodology 900 begins at 902, and at 904 data is received from a legacy industrial automation device (such as a legacy PLC). At 906, the legacy device is recognized based upon the received data. For instance, particular devices output data in specific formats, and by reviewing output data a device type can be determined. At 908, a template associated with the legacy device is accessed, and at 910, the template is utilized to map received data (in a first data format) to data formatted in accordance with a hierarchically structured data model. The methodology 900 completes at 912.

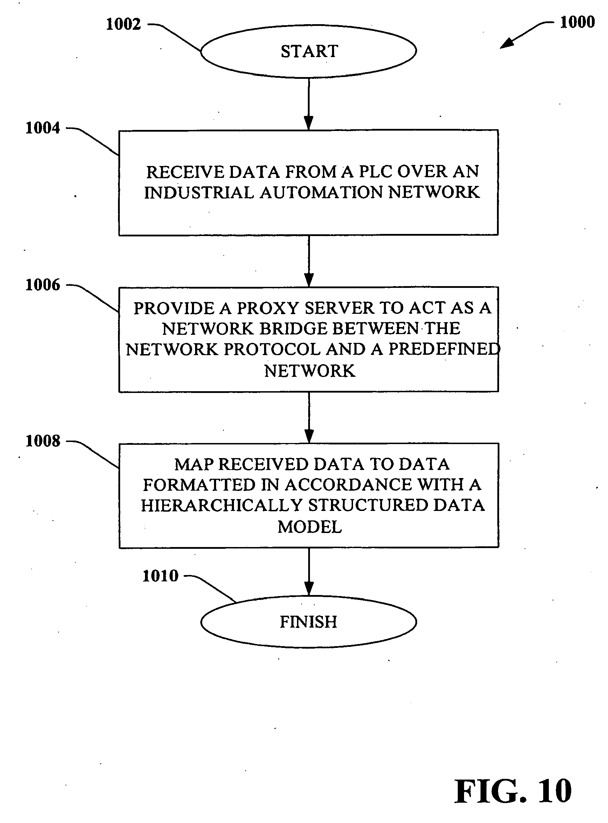

Turning now to Fig. 10, a methodology 1000 for mapping data from a first format to a format associated with a hierarchically structured data model is illustrated. The methodology 1000 begins at 1002, and at 1004 data is received from a PLC or other suitable device over an industrial automation network (which is associated with a protocol). At 1006, a proxy server is provided, wherein the proxy server acts as a network bridge between the industrial automation network and a pre-defined network associated with a set protocol. For instance, the proxy server can convert data associated with Foundation FieldBus so that the data is formatted with respect to CIP. At 1008, the received data is converted to data that is formatted in accordance with a hierarchically structured data model, and the methodology 1000 completes at 1010.

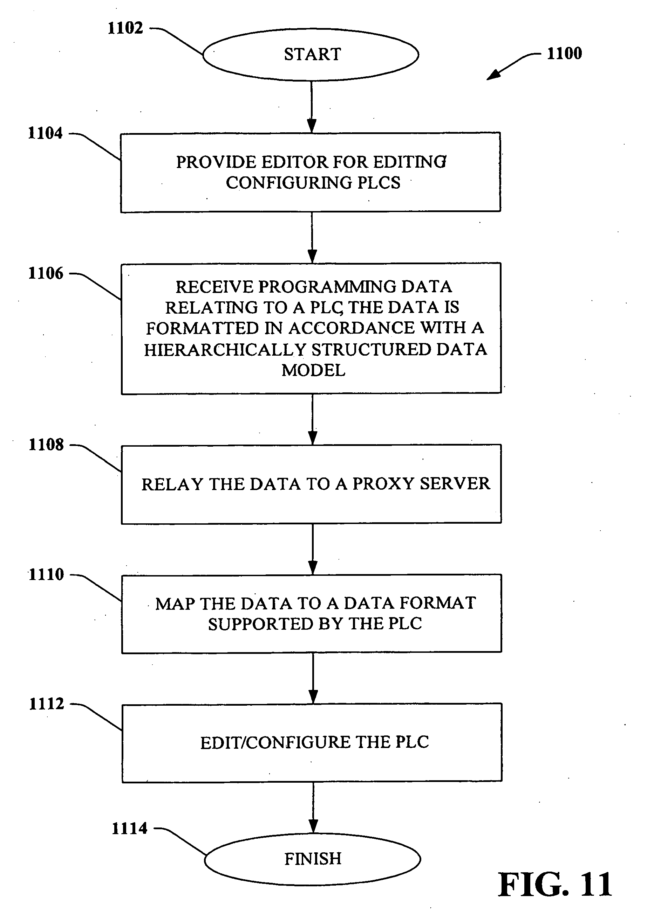

Referring now to Fig. 11, a methodology 1100 for editing/configuring/programming a legacy and/or third-party PLC is illustrated, wherein the PLC does not support a hierarchically structured data model. The methodology begins at 1102, and at 1104 an editor for editing/configuring PLCs is provided. At 1106, programming data relating to a particular PLC is received, wherein the programming data is formatted in accordance with a hierarchically structured data model (e.g., based upon ISA S95 and/or ISA S88). As used herein, the term "programming data" is also intended to cover instructions for editing as well as instructions for configuring the PLC. At 1108, the programming data is relayed to a proxy server, and at 1110 the data is mapped to a data format that is supported by the PLC. Furthermore, the proxy server can alter format of the programming data so that it can be delivered over a network that carries data to the PLC. At 1112, the PLC is edited configured according to the program data. Thus, a common data representation can be utilized across an enterprise for both receiving/reviewing data and editing/configuring industrial automation devices. The methodology 1100 completes at 1114.

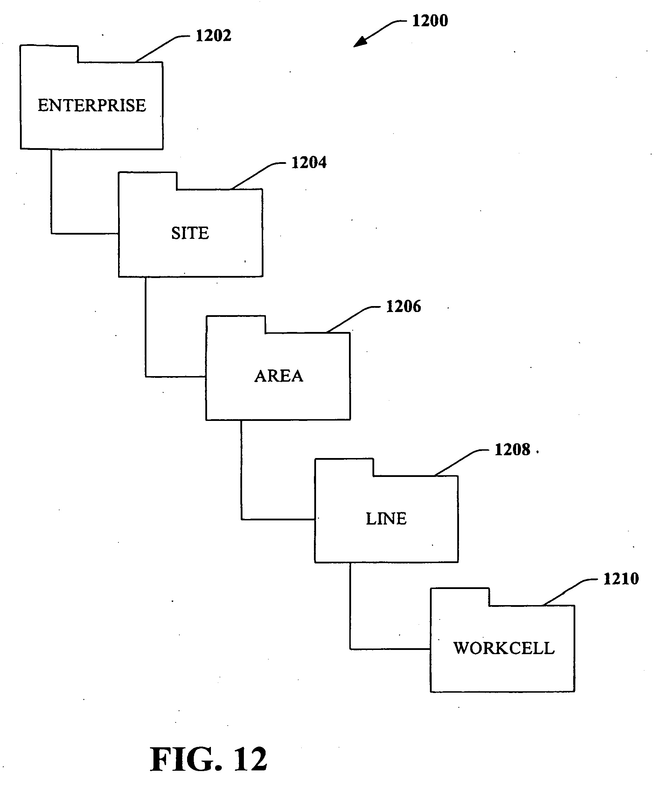

Referring now to Fig. 12, an exemplary hierarchical structure 1200 which can be utilized in connection with the hierarchically structured data model described herein is illustrated. For example, the data model can facilitate nested structures, thereby mitigating deficiencies associated with data models that employ flat namespaces. The structure 1200 includes an enterprise level 1202, where a particular enterprise can be represented within data structured in accordance with a hierarchical data model. Beneath the enterprise level 1202 level can be a site level 1204, so that a particular factory (site) within an enterprise can be represented within a data packet. Beneath the site level 1204 an area level 1206 can exist, which specifies an area within the factory that relates to the data. A line level 1208 can lie beneath the area level 1206, wherein the line level 1208 is indicative of a line associated with particular data. Beneath the line level 1208 a workcell level 1210 can exist, thereby indicating a workcell associated with the data. Utilizing a nested, hierarchical data model, PLCs can become more aware of data associated therewith. Furthermore, the hierarchy 1200 can be customized by an owner of such hierarchy. For instance, more granular objects/levels can be defined within the hierarchy 1200.

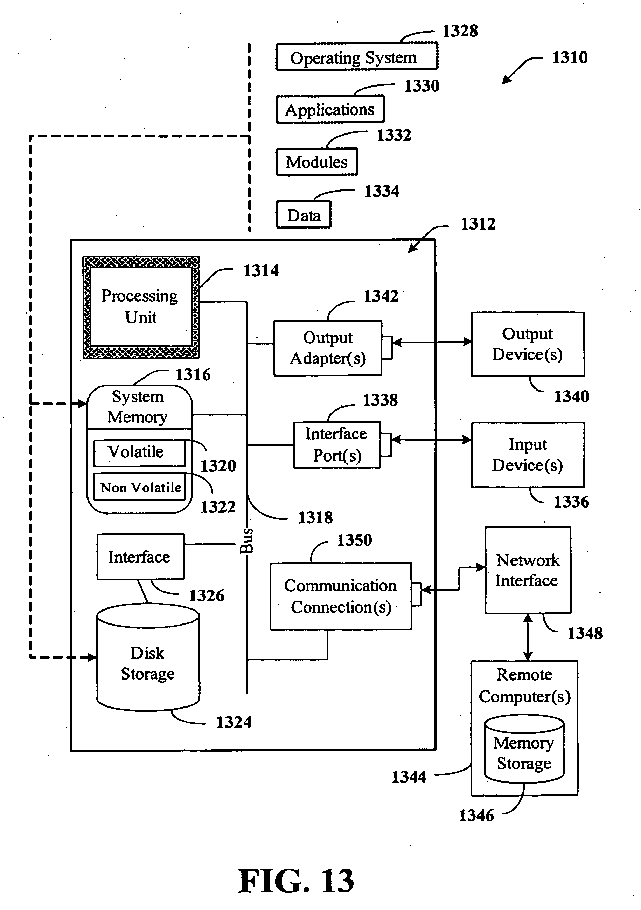

With reference to Fig.13, an exemplary environment 1310 for implementing various aspects of the invention includes a computer 1312. The computer 1312 includes a processing unit 1314, a system memory 1316, and a system bus 1318. The system bus 1318 couples system components including, but not limited to, the system memory 1316 to the processing unit 1314. The processing unit 1314 can be any of various available processors. Dual microprocessors and other multiprocessor architectures also can be employed as the processing unit 1314.

The system bus 1318 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1316 includes volatile memory 1320 and nonvolatile memory 1322. The basic input/output system (BIOS), containing the basic routines to transfer information between elements within the computer 1312, such as during start-up, is stored in nonvolatile memory 1322. By way of illustration, and not limitation, nonvolatile memory 1322 can include read only memory (ROM), programmable ROM (PROM), electrically programmable ROM (EPROM), electrically erasable ROM (EEPROM), or flash memory. Volatile memory 1320 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1312 also includes removable/non-removable, volatile/non-volatile computer storage media. Fig. 13 illustrates, for example a disk storage 1324. Disk storage 1324 includes, but is not limited to, devices like a magnetic disk drive, floppy disk drive, tape drive, Jaz drive, Zip drive, LS-100 drive, flash memory card, or memory stick. In addition, disk storage 1324 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1324 to the system bus 1318, a removable or non-removable interface is typically used such as interface 1326.

It is to be appreciated that Fig. 13 describes software that acts as an intermediary between users and the basic computer resources described in suitable operating environment 1310. Such software includes an operating system 1328. Operating system 1328, which can be stored on disk storage 1324, acts to control and allocate resources of the computer system 1312. System applications 1330 take advantage of the management of resources by operating system 1328 through program modules 1332 and program data 1334 stored either in system memory 1316 or on disk storage 1324. It is to be appreciated that the subject invention can be implemented with various operating systems or combinations of operating systems.

A user enters commands or information into the computer 1312 through input device(s) 1336. Input devices 1336 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1314 through the system bus 1318 *via* interface port(s) 1338. Interface port(s) 1338 include, for example, a serial port, a parallel port, a game port, and a universal serial bus (USB). Output device(s) 1340 use some of the same type of ports as input device(s) 1336. Thus, for example, a USB port may be used to provide input to computer 1312, and to output information from computer 1312 to an output device 1340. Output adapter 1342 is provided to illustrate that there are some output devices 1340 like monitors, speakers, and printers, among other output devices 1340, which require special adapters. The output adapters 1342 include, by way of illustration and not limitation, video and sound cards that provide a means of connection between the output device 1340 and the system bus 1318. It should be noted that other devices and/or systems of devices provide both input and output capabilities such as remote computer(s) 1344.

Computer 1312 can operate in a networked environment using logical connections to one or more remote computers, such as remote computer(s) 1344. The remote computer(s) 1344 can be a personal computer, a server, a router, a network PC, a workstation, a microprocessor based appliance, a peer device or other common network node and the like, and typically includes many or all of the elements described relative to computer 1312. For purposes of brevity, only a memory storage device 1346 is illustrated with remote computer(s) 1344. Remote computer(s) 1344 is logically connected to computer 1312 through a network interface 1348 and then physically connected *via* communication connection 1350. Network interface 1348 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1350 refers to the hardware/software employed to connect the network interface 1348 to the bus 1318. While communication connection 1350 is shown for illustrative clarity inside computer 1312, it can also be external to computer 1312. The hardware/software necessary for connection to the network interface 1348 includes, for exemplary purposes only, internal and external technologies such as, modems including regular telephone grade modems, cable modems and DSL modems, ISDN adapters, and Ethernet cards.

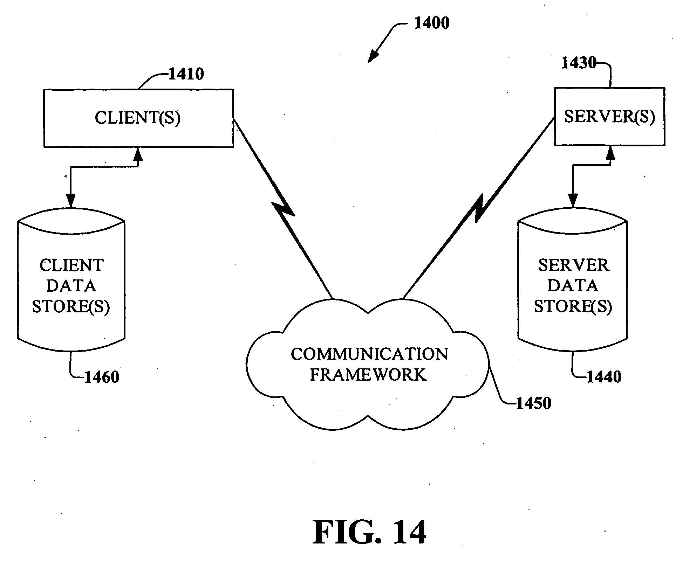

Fig. 14 is a schematic block diagram of a sample-computing environment 1400 with which the subject invention can interact. The system 1400 includes one or more client(s) 1410. The client(s) 1410 can be hardware and/or software (e.g., threads, processes, computing devices). The system 1400 also includes one or more server(s) 1430. The server(s) 1430 can also be hardware and/or software (e.g., threads, processes, computing devices). The servers 1430 can house threads to perform transformations by employing the subject invention, for example. One possible communication between a client 1410 and a server 1430 can be in the form of a data packet adapted to be transmitted between two or more computer processes. The system 1400 includes a communication framework 1450 that can be employed to facilitate communications between the client(s) 1410 and the server(s) 1430. The client(s) 1410 are operably connected to one or more client data store(s) 1460 that can be employed to store information local to the client(s) 1410. Similarly, the server(s) 1430 are operably connected to one or more server data store(s) 1440 that can be employed to store information local to the servers 1430.

What has been described above includes examples of the invention. It is, of course, not possible to describe every conceivable combination of components for purposes of describing the subject invention, but one of ordinary skill in the art may recognize that many further combinations and permutations of the invention are possible. Accordingly, the invention is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.
In summary the invention discloses a proxy server comprising an interface component that receives data from a programmable logic controller, other factory controllers, or smart devices on the factory floor. A mapping component communicatively coupled to the interface component converts the data into data structured in accordance with a hierarchical data model. The proxy server can further be employed to convert data from a plurality of industrial automation devices and controllers connected over industrial automation communication networks as well as provide uniform security features to such devices.

## Claims

1. A proxy server (402), comprising:
an interface component (410) that receives data from a controller (404, 406, 408);
a mapping component (412) communicatively coupled to the interface component that converts the data into data structured in accordance with a hierarchical data model; **characterized by**
a security component (418) adapted to provide uniform security to the controller; and
a filtering component (420), the security component operating in conjunction with the filtering component, the filtering component selectively filtering data based at least in part upon one or more of user identity and user location.

2. The proxy server of claim 1, the hierarchical data model is based at least in part upon a combination of ISA S95 and ISA S88.

3. The proxy server of claim 1 or 2, further comprising a communications component that maps data formatted in accordance with the hierarchical data model to a web service.

4. The proxy server of one of claims 1 to 3, further comprising a workflow component that executes a workflow.

5. A system that facilitates configuration of data in an industrial automation environment, comprising:
a controller; and
the proxy server of one of the claims 1 to 4.

6. The system of claim 5, the proxy server receiving data from a plurality of controllers.

7. The system of claim 5 or 6, the proxy server being one or more of a programmable logic controller, a numeric controller, a robotic controller, a smart device, a server, a desktop computer, a switch, a router, and a gateway.

## Patentansprüche

1. Proxy-Server (402), umfassend:
eine Schnittstellenkomponente (410), die Daten von einer Steuerung (404, 406, 408) empfängt;
eine kommunikativ mit der Schnittstellenkomponente gekoppelte Abbildungskomponente (412), die die Daten in gemäß einem hierarchischen Datenmodell strukturierte Daten umsetzt; **gekennzeichnet durch** eine Sicherheitskomponente (418), die dafür ausgelegt ist, gleichförmige Sicherheit für die Steuerung bereitzustellen; und
eine Filterungskomponente (420), wobei die Sicherheitskomponente in Verbindung mit der Filterungskomponente arbeitet, wobei die Filterungskomponente Daten selektiv mindestens teilweise auf der Basis von Benutzeridentität und/oder Benutzerort filtert.

2. Proxy-Server nach Anspruch 1, wobei das hierarchische Datenmodell mindestens teilweise auf einer Kombination von ISA S95 und ISA S88 basiert.

3. Proxy-Server nach Anspruch 1 oder 2, der ferner eine Kommunikationskomponente umfasst, die gemäß dem hierarchischen Datenmodell formatierte Daten auf einen Web-Dienst abbildet.

4. Proxy-Server nach einem der Ansprüche 1 bis 3, der ferner eine Arbeitsablaufkomponente umfasst, die einen Arbeitsablauf ausführt.

5. System, das die Konfiguration von Daten in einer industriellen Automatisierungsumgebung ermöglicht, umfassend:
eine Steuerung; und
den Proxy-Server nach einem der Ansprüche 1 bis 4.

6. System nach Anspruch 5, wobei der Proxy-Server Daten von mehreren Steuerungen empfängt.

7. System nach Anspruch 5 oder 6, wobei der Proxy-Server einer oder mehrere der folgenden Alternativen ist: eine programmierbare Logiksteuerung, eine numerische Steuerung, eine robotische Steuerung, eine intelligente Einrichtung, ein Server, ein Desktop-Computer, ein Switch, ein Router und ein Gateway.

## Revendications

1. Serveur mandataire (402), comprenant :
un composant interface (410) qui reçoit des données provenant d'un contrôleur (404, 406, 408),
un composant de mappage (412) couplé par communication au composant interface lequel convertit les données en données structurées en fonction d'un modèle de données hiérarchique, **caractérisé par**
un composant de sécurité (418) conçu pour procurer une sécurité uniforme au contrôleur, et
un composant de filtrage (420), le composant de sécurité fonctionnant conjointement avec le composant de filtrage, le composant de filtrage filtrant sélectivement des données sur la base au moins en partie d'une ou de plusieurs identités utilisateur et d'un emplacement d'utilisateur.

2. Serveur mandataire selon la revendication 1, le modèle de données hiérarchique étant fondé au moins en partie sur une combinaison des standards ISA S95 et ISA S88.

3. Serveur mandataire selon la revendication 1 ou 2, comprenant en outre un composant de communications qui mappe sur un service Web des données formatées en fonction du modèle de données hiérarchique.

4. Serveur mandataire selon l'une des revendications 1 à 3, comprenant en outre un composant de flux de données qui exécute une automatisation des flux de données.

5. Système qui facilite la configuration de données dans un environnement d'automatisation industriel, comprenant :
un contrôleur, et
le serveur mandataire de l'une des revendications 1 à 4.

6. Système selon la revendication 5, le serveur mandataire recevant des données en provenance d'une pluralité de contrôleurs.

7. Système selon la revendication 5 ou 6, le serveur mandataire étant l'un d'un contrôleur logique programmable, d'un contrôleur numérique, d'un contrôleur robotique, d'un dispositif intelligent, d'un serveur, d'un ordinateur portatif, d'un commutateur, d'un routeur et d'une passerelle ou plus.
